# FASCICULE DE BREVET EUROPEEN

(11) **EP 1 362 184 B1**
(45) Date de publication et mention de la délivrance du brevet: **19.05.2010**
(21) Numéro de dépôt: 02701404.2
(22) Date de dépôt: 04.02.2002
(51) Int. Cl.: F03D 9/00, H02P 9/30, H02P 9/48

(54) **PROCEDE ET DISPOSITIF DE REGULATION D'UNE EOLIENNE**
REGELUNGSSYSTEM FÜR EINE WINDKRAFTANLAGE
METHOD AND DEVICE FOR REGULATING A WIND MACHINE

(30) Priorité: 23.02.2001 FR 0102519
(43) Date de publication de la demande: 19.11.2003
(73) Titulaire: JEUMONT S.A., 92400 Courbevoie (FR)
(72) Inventeur: CANINI, Jean-Marc, F-59149 Aibes (FR); MILET, Yves, F-59740 Solre-le-Château (FR); BRUTSAERT, Patrick, F-59245 Recquignies (FR)
(74) Mandataire: Bouget, Lucien
(86) Numéro de dépôt international: PCT/FR2002/000421
(87) Numéro de publication internationale: WO 2002/068819

(56) Documents cités:
- WO-A-00/36298
- DE-A- 19 844 258
- US-A- 6 137 187

## Description

L'invention concerne un procédé de régulation de paramètres de fonctionnement d'une installation de production d'énergie électrique comportant une éolienne et un dispositif pour mettre en oeuvre le procédé de régulation.

On connaît des installations de production d'énergie électrique, à partir d'énergie éolienne qui comportent un alternateur dont le rotor est entraîné par une partie tournante d'une éolienne comportant un moyeu et des pales fixées sur le moyeu.

On a proposé en particulier des éoliennes dont la partie tournante est reliée directement au rotor de l'alternateur, sans transmission mécanique intermédiaire. De telles éoliennes présentent l'avantage d'une plus grande simplicité mécanique, l'ensemble rotatif comportant la partie tournante de l'éolienne solidaire du rotor de l'alternateur étant monté rotatif sur la structure de l'éolienne par l'intermédiaire d'au moins un palier qui peut être constitué par un seul roulement, dans un mode de réalisation avantageux.

En outre, la suppression d'éléments mécaniques tels que des réducteurs comportant des engrenages se traduit par une diminution des coûts de construction et de maintenance de l'éolienne. On évite également des risques de pannes et de détériorations de certaines parties de l'éolienne, par exemple par grippage de la pignonerie d'un réducteur. Toutefois, les inconvénients d'une liaison directe entre la partie tournante de l'éolienne et le rotor de l'alternateur sont que l'alternateur doit pouvoir fonctionner de manière satisfaisante à basse vitesse de rotation et que les conditions atmosphériques variables dans lesquelles fonctionne l'éolienne, en particulier la vitesse du vent, peuvent entraîner des variations des paramètres électriques du courant fourni par l'éolienne à un réseau électrique, ces variations étant généralement inacceptables.

Une forme de réalisation particulièrement avantageuse de l'alternateur d'une éolienne utilisée pour la production de courant électrique met en oeuvre un rotor d'alternateur comportant des aimants permanents généralement disposés dans un champ tournant de direction axiale produit par les bobinages d'un stator disposé en vis-à-vis du rotor. L'alternateur présente généralement une forme discoïde, les aimants du rotor et les bobinages du stator étant répartis circonférentiellement sur des surfaces en forme de disques.

On a proposé, dans le FR-97 02808 déposé par les sociétés JEU-MONT INDUSTRIE et FRAMATOME, l'utilisation pour la production d'énergie électrique par une éolienne, d'un tel alternateur discoïde dont les avantages ont été indiqués dans la description de la demande de brevet.

De manière à obtenir un courant électrique stable et de qualité sur le réseau alimenté par l'éolienne, on a également proposé, dans cette demande de brevet, d'associer à l'alternateur une électronique de puissance comportant un premier convertisseur courant altematif-courant continu, tel qu'un redresseur, et un second convertisseur courant continu-courant alternatif tel qu'un onduleur destinés à fournir un courant alternatif stable et de qualité au réseau alimenté par l'éolienne.

La conversion du courant alternatif produit par l'alternateur de l'éolienne en courant continu et la conversion du courant continu obtenu en courant alternatif permettent en effet de s'affranchir des variations de fonctionnement de l'éolienne dues aux variations atmosphériques et de fournir au réseau un courant à fréquence parfaitement constante (par exemple 50 Hz), avec un très bon contrôle de la tension et du facteur de puissance du courant fourni.

Toutefois, dans cette demande de brevet, on ne décrivait pas de moyen permettant de réaliser une régulation de tous les paramètres de fonctionnement de l'éolienne, que ces paramètres soient relatifs au fonctionnement électrique de l'alternateur ou constitués par la vitesse de rotation de l'ensemble rotatif de l'éolienne.

Un premier problème qui se pose dans le cadre de l'exploitation des éoliennes est relatif à la protection de l'ensemble rotatif comportant les pales et le moyeu de l'éolienne, lorsque le vent est très fort et atteint des vitesses susceptibles d'entraîner un emballement de l'éolienne et une détérioration de l'ensemble rotatif et/ou des paliers de cet ensemble rotatif.

Les éoliennes doivent être réalisées de manière à assurer un décrochage de la partie tournante, lorsque la vitesse du vent dépasse un certain niveau ; la performance des pales de l'ensemble rotatif devient alors très faible et on évite l'emballement.

Dans la zone de décrochage, on compense l'augmentation de puissance du vent par une diminution de la performance des pales ; la puissance est donc grossièrement constante.

On obtient un décrochage automatique pour une certaine vitesse du vent, du fait du profil des pales de l'ensemble rotatif et d'une vitesse de rotation imposée à cet ensemble rotatif. De tels systèmes à décrochage automatique peuvent être désignés par le terme anglais "stall" et comportent généralement un ensemble rotatif dont les pales sont montées fixes sur le moyeu.

D'autres systèmes, généralement désignés par le terme anglais "pitch" utilisent un ensemble rotatif dont les pales sont montées tournantes sur le moyeu autour d'un axe perpendiculaire à l'axe de rotation de l'ensemble rotatif, généralement par l'intermédiaire d'un roulement assurant le montage rotatif du pied de la pale, le dispositif comportant de plus des moyens mécaniques assurant le réglage de l'angle de calage de la pale sur le moyeu. Ces moyens mécaniques sont généralement commandés de manière à régler en continu l'angle de calage de la pale, pendant le fonctionnement de l'éolienne. Dans le cas d'un vent dont la vitesse dépasse une vitesse limite prévue, le système assure le décrochage de l'ensemble rotatif.

Le système "stall" présentent l'inconvénient d'être définitivement réglé, lorsqu'on a assuré le montage des pales sur le moyeu de l'ensemble rotatif, le décrochage étant toujours effectué pour une vitesse de vent prédéterminée.

En effet, le réglage de l'éolienne est réalisé de manière que l'ensemble rotatif tourne à une vitesse nominale qui se combine à la vitesse du vent pour provoquer le décrochage dans des conditions qui ne peuvent être changées qu'en modifiant le montage des pales sur le moyeu, pour faire varier l'angle de calage par pivotement des pales autour de leur axe longitudinal. Cette opération de changement de l'angle de calage des pales doit être réalisée de manière manuelle et nécessite un arrêt de l'éolienne pendant un temps qui peut être relativement long et l'intervention de personnel chargé de cette opération, sur la partie tournante de l'éolienne.

Indépendamment des problèmes dus au décrochage par vent fort, il est souhaitable d'adapter l'angle de calage des pales aux conditions climatiques, de manière à récupérer au mieux l'énergie du vent. Une telle adaptation doit être réalisée en fonction des variations climatiques et en particulier, il est nécessaire de modifier le calage des pales pour passer d'un fonctionnement par temps chaud (été) à un fonctionnement par temps froid (hiver).

En effet, l'hiver l'air froid est plus dense qu'en été où l'air est plus chaud et plus léger. Le vent est donc plus énergétique pendant l'hiver, de sorte qu'il est souhaitable de modifier le calage des pales des éoliennes au changement de saison. De telles opérations sont lourdes et se traduisent par des pertes d'exploitation quant à la fourniture et à la vente de courant électrique. On peut donc prévoir de ne pas modifier le calage des pales mais, dans ce cas, l'éolienne doit être dimensionnée pour le fonctionnement en période d'hiver, ce qui entraîne une perte d'exploitation en période d'été.

Il est courant de prévoir deux modes différents du couplage de la génératrice électrique permettant de fonctionner à deux vitesses nominales différentes de rotation de l'ensemble rotatif de l'éolienne.

Cependant, chacune de ces deux vitesses de fonctionnement n'est adaptée qu'à une vitesse du vent et, en dehors de ces conditions idéales, le rendement énergétique de l'éolienne est dégradé d'autant plus fortement qu'on s'éloigne des conditions de fonctionnement idéales.

Un autre inconvénient des éoliennes dont les pales ont un calage fixe et qui fonctionnent selon le système de "stall" à vitesse fixe est qu'il est nécessaire d'atteindre la vitesse de rotation nominale de l'éolienne avant de connecter la génératrice au réseau pour éviter une connexion dans des conditions inacceptables pour le réseau. Il est donc nécessaire d'atteindre un niveau suffisant de puissance pour commencer à exploiter l'éolienne pour la fourniture de courant.

Les systèmes de type "pitch" dans lesquels les pales sont montées avec un angle de calage réglable en continu sur le moyeu présentent des avantages appréciables par rapport au dispositif fonctionnant suivant le système de "stall" à vitesse fixe. Ces systèmes permettent en particulier de fonctionner à vitesse fixe ou à vitesse variable et de réaliser un couplage au réseau pour des vitesses de vent faibles. Toutefois, de tels systèmes sont extrêmement fragiles du fait du montage des pales par l'intermédiaire d'un roulement et de l'utilisation d'une chaîne de régulation de l'angle de calage. Il se produit une concentration des efforts sur les pales, au niveau du roulement et du fait que les angles de rotation des pales nécessaires pour le calage sont généralement faibles, les pistes de roulement subissent un marquage dans leur zone de contact avec les éléments de roulement.

La chaîne de régulation de l'angle de calage doit comporter un moyen de commande du déplacement des pales qui peut être de type hydraulique, électrique ou électromécanique. De telles commandes présentent une dynamique qui se traduit par une action relativement lente de la chaîne de régulation. L'orientation des pales ne se trouve donc pas toujours à la valeur idéale nécessitée par les conditions de fonctionnement. De ce fait, dans certaines phases, on ne récupère pas suffisamment d'énergie ou, au contraire, on récupère une énergie trop importante, ce qui entraîne des inconvénients dans le fonctionnement des transmissions mécaniques ou électriques de la puissance.

Les ensembles rotatifs des éoliennes doivent d'autre part être réalisés de manière qu'on puisse assurer un freinage complémentaire de l'éolienne, par exemple pour un arrêt normal ou un arrêt accidentel, en combinaison avec un système de freinage mécanique disposé sur l'arbre de la partie tournante. La partie tournante doit donc comporter un dispositif de freinage, généralement de type aérodynamique.

Dans le cas d'un système "stall" à vitesse fixe, on prévoit un élément de freinage à l'extrémité libre des pales qui est orienté de manière à assurer un freinage aérodynamique.

Dans le cas d'un système "pitch", le freinage peut être réalisé par mise en drapeau des pales, par l'intermédiaire de la chaîne de réglage de l'angle de calage.

Dans l'un et l'autre cas, lorsqu'il apparaît sur le réseau une microcoupure, c'est-à-dire une coupure de durée typiquement inférieure à une seconde de la circulation du courant électrique, on doit commander l'arrêt de l'éolienne, par freinage, pour éviter tout risque de détérioration de la génératrice électrique. A la suite de l'arrêt, il est nécessaire de prévoir une procédure de redémarrage, si bien que ce mode de fonctionnement avec arrêt de l'éolienne se traduit par une perte de production et une fatigue des éléments mécaniques de l'éolienne et en particulier du frein mécanique utilisé pour l'arrêt et des pales.

Les réseaux électriques assurant la distribution de courant à des utilisateurs nécessitent que la tension et la fréquence du courant fourni soient les plus constantes possible, ces tension et fréquence dépendant de la vitesse de rotation de la génératrice et donc de l'éolienne, dans le cas d'un réseau alimenté par une éolienne.

Dans le cas où il est nécessaire de fournir une éolienne pour un réseau utilisant une fréquence différente d'une fréquence habituelle (par exemple 60 Hz au lieu de 50 Hz), il faut modifier la génératrice (et éventuellement un multiplicateur) pour les adapter à la fréquence demandée.

Dans le cas d'un réseau dont la fréquence n'est pas très stable et varie par rapport à la fréquence nominale prévue, il est nécessaire d'adapter le fonctionnement de l'éolienne.

Si la fréquence demandée sur le réseau est supérieure à la fréquence prévue, la vitesse de rotation de l'éolienne doit augmenter et en conséquence, la puissance fournie augmente.

Si la fréquence demandée sur le réseau diminue, la vitesse de rotation de l'éolienne diminue et donc la puissance fournie diminue.

On ne maîtrise donc pas parfaitement la puissance de l'éolienne et, de ce fait, il est nécessaire de prévoir un surdimensionnement de l'éolienne pour faire face à toutes les demandes, ce qui entraîne un surcoût.

Enfin, l'ensemble rotatif de l'éolienne ne tourne pas à vitesse parfaitement constante et subit des variations périodiques, du fait du passage des pales de l'ensemble rotatif devant le mât supportant la nacelle sur laquelle est monté l'ensemble rotatif. La génératrice de courant ne tourne donc pas à une vitesse parfaitement régulée assurant un fonctionnement parfaitement stable et constant.

Un autre exemple de procédé et de dispositif de régulation selon l'état de la technique et décrit dan le document WO-A-0036298.

Le but de l'invention est donc de proposer un procédé de régulation d'une installation de production d'énergie électrique selon la revendication 1 et comportant un alternateur électrique ayant un rotor solidaire de la partie tournante d'une éolienne, pour constituer un ensemble rotatif, et une électronique de puissance comportant un moyen de conversion du courant alternatif produit par l'alternateur, en courant continu, ce procédé permettant de remédier aux différents inconvénients des systèmes antérieurs qui ont été décrits plus haut.

Dans ce but, on règle les caractéristiques électriques (intensité, tension, déphasage intensité/tension et fréquence) du courant électrique produit par l'alternateur et la vitesse de rotation de l'ensemble rotatif, par modulation du courant continu produit par le moyen de conversion de l'électronique de puissance à partir du courant électrique produit par l'alternateur.

De manière préférentielle :
- dans une première phase de fonctionnement de l'installation de production d'énergie électrique, pour des vitesses faibles du vent, on fait croître la vitesse de rotation de l'ensemble rotatif de l'éolienne, de manière que la vitesse de rotation passe progressivement d'une valeur faible de démarrage à une valeur maximale, le couple sur le rotor étant croissant, suivant une loi de variation vitesse/couple prédéterminée ;
- selon un premier mode de mise en oeuvre de l'invention, dans une seconde phase, lorsque la vitesse du vent est supérieure à une première valeur de seuil, on régule la vitesse de rotation de l'ensemble rotatif de l'éolienne à une valeur maximale fixe, ou valeur nominale, permettant d'obtenir une récupération de puissance optimale de l'éolienne ;
- dans ce cas, de préférence, on fixe la valeur nominale de la vitesse de rotation à une valeur prise parmi au moins deux valeurs, en fonction de conditions climatiques sur le site de l'éolienne et en particulier à une première valeur en période d'été et à une seconde valeur en période d'hiver ;
- selon un second mode de mise en oeuvre de l'invention, dans une seconde phase de fonctionnement de l'éolienne, lorsque la vitesse du vent est supérieure à une seconde valeur de seuil, on régule la vitesse maximale de rotation de l'ensemble rotatif de l'éolienne, de manière à maintenir la puissance de l'éolienne à une valeur fixe et, de préférence, à la valeur maximale de la puissance acceptable par l'éolienne ;
- dans ce cas, de préférence, lorsque la valeur de la vitesse du vent est inférieure à la seconde valeur de seuil, on fait croître la vitesse de rotation de l'ensemble rotatif, de manière progressive et régulée et on enregistre les variations de la valeur de la vitesse de rotation, de manière à utiliser ultérieurement la courbe de variation de la vitesse de rotation pour contrôler la montée en vitesse de l'ensemble rotatif.

L'invention est également relative à un dispositif de régulation décrit dans la revendication 17 et constitué par une électronique de puissance et une unité de régulation et de commande permettant de mettre en oeuvre le procédé de régulation suivant l'invention.

Afin de bien faire comprendre l'invention, on va maintenant décrire, à titre d'exemple en se référant aux figures jointes en annexe, une éolienne de production d'énergie électrique et la mise en oeuvre d'un procédé de régulation suivant l'invention dans divers cas de fonctionnement de l'éolienne.
La figure 1 est une vue schématique en coupe par un plan vertical de la nacelle d'une éolienne de production d'énergie électrique.
La figure 2 est une vue schématique de la partie électrique de l'éolienne comportant en particulier une électronique de puissance.
Les figures 3A, 3B et 3C sont des diagrammes de fonctionnement d'une éolienne à système "pitch" pour trois vitesses de vent différentes.
Les figures 4A, 4B et 4C sont des diagrammes de fonctionnement d'une éolienne mettant en oeuvre le procédé de régulation suivant l'invention, pour trois vitesses de vent différentes.
La figure 5 est une vue schématique de l'ensemble rotatif d'une éolienne et du diagramme de fonctionnement d'une éolienne mettant en oeuvre le procédé suivant l'invention.
La figure 6 est un diagramme montrant les variations du coefficient de performance d'une pale d'éolienne en fonction de l'angle d'incidence de la résultante de la vitesse du vent et de la vitesse de rotation de la pale.
La figure 7 est un diagramme donnant la puissance fournie par l'éolienne en fonction de la vitesse du vent pour différentes vitesses de rotation de la partie tournante.

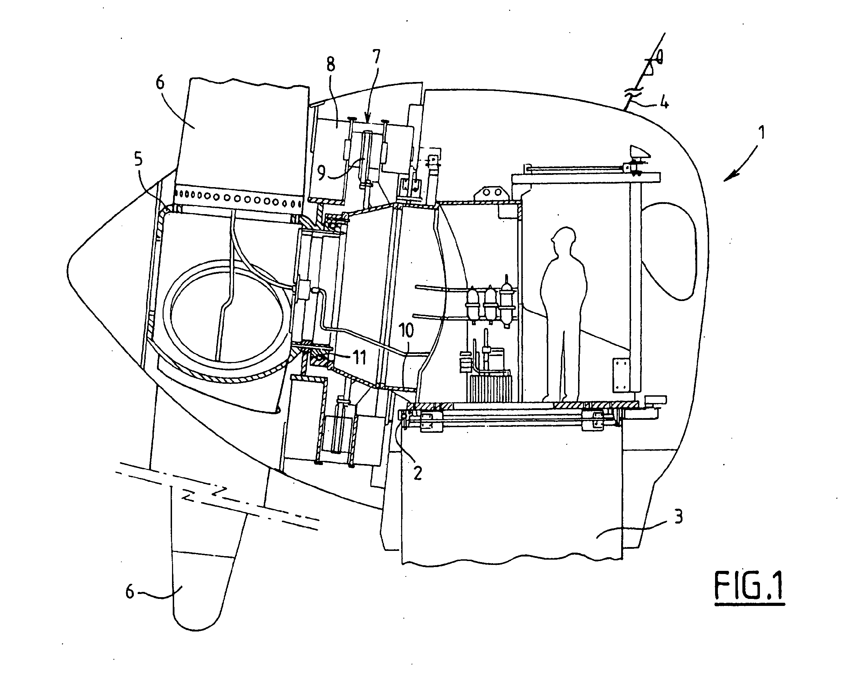

Sur la figure 1, on voit la nacelle d'une éolienne désignée de manière générale par le repère 1 qui est montée rotative, par l'intermédiaire d'un palier à roulement 2, à axe vertical, sur la partie supérieure du mât 3 de l'éolienne.

Une antenne 4 portant une girouette permet de commander un moteur d'orientation de la nacelle 1 de l'éolienne, autour de l'axe vertical du mât 3 pour l'orienter par rapport à la direction du vent, à chaque instant.

La nacelle 1 de l'éolienne porte l'ensemble rotatif de l'éolienne qui comporte en particulier un moyeu 5 sur lequel sont fixées, de manière rigide, trois pales 6 présentant une section profilée.

La partie tournante de l'éolienne comportant le moyeu 5 et les pales 6 assure la mise en rotation du rotor 8 d'une génératrice de courant électrique 7 comportant un stator 9 fixé sur une partie de structure 10 de la nacelle 1 solidaire d'une plate-forme montée rotative sur l'extrémité du mât 3, par l'intermédiaire du palier horizontal 2.

Le rotor 8 et le stator 9 de l'alternateur 7 sont réalisés sous une forme discoïde, le rotor 8 comportant deux éléments de rotor placés de part et d'autre du stator, chacun des éléments de rotor comportant une face active en forme de disque portant des aimants, répartis suivant la circonférence du disque. Le stator 9 comporte deux éléments de stator comportant chacun une face discoïde sur laquelle sont fixées des bobines réparties circonférentiellement, chaque face discoïde d'un élément de stator étant dirigée vers la face correspondante discoïde garnie d'aimants permanents d'un élément du rotor 8.

De manière typique, chacun des disques de rotor peut comporter quatre-vingt dix aimants répartis circonférentiellement.

L'ensemble rotatif de l'éolienne comportant la partie tournante de l'éolienne et le rotor 8 de l'alternateur 7 est monté rotatif sur la structure fixe 10 de la nacelle 1, par l'intermédiaire d'un seul palier à roulement 11 ayant un axe faiblement incliné par rapport à la direction horizontale.

Les bobinages du stator 9 sont reliés électriquement à des moyens de connexion permettant d'envoyer le courant fourni par l'éolienne sur un réseau d'utilisation, par l'intermédiaire d'une électronique de puissance qui peut être disposée, au moins partiellement, à l'intérieur de la nacelle 1.

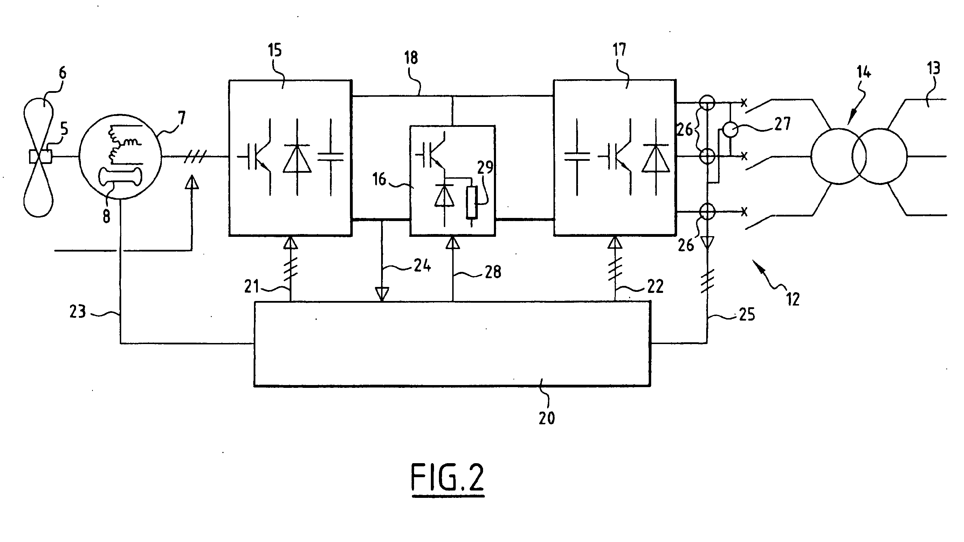

Sur la figure 2, on a représenté, de manière schématique, l'électronique de puissance désignée de manière générale par le repère 12 et permettant de récupérer le courant électrique produit à la sortie de l'alternateur 7 dont le rotor 8 est entraîné en rotation par la partie tournante 5,6 de l'éolienne et de fournir à un réseau électrique d'utilisation 13 un courant électrique alternatif, par l'intermédiaire d'un transformateur 14.

Le courant produit par l'alternateur 7 et le courant fourni au réseau sont des courants alternatifs triphasés.

Chacune des phases en sortie de l'alternateur 7 est reliée à l'entrée de l'électronique de puissance et chacune des phases du courant triphasé à la sortie de l'électronique de puissance est reliée à l'entrée du transformateur 14.

L'électronique de puissance, désignée de manière générale par le repère 12, comporte successivement un redresseur 15 assurant la conversion du courant alternatif produit par l'alternateur en courant continu, un hacheur rhéostatique 16 et un onduleur 17.

Le redresseur 15 et l'onduleur 17 sont reliés entre eux par un bus 18 à courant continu joignant la sortie du redresseur 15 à l'entrée de l'onduleur 17. Le hacheur rhéostatique 16 est monté en parallèle sur le bus 18, entre le redresseur 15 et l'onduleur 17.

Le redresseur 15 est un redresseur à modulation de largeur d'impulsions (MLI) qui permet de moduler la largeur des impulsions de courant continu produit à partir du courant alternatif de l'alternateur 7, la période des impulsions de courant continu étant constante et par exemple égale à 1000 Hz.

Le redresseur 15 comporte trois étages de traitement reliés chacun à une phase de l'alternateur 7 et comportant chacun deux transistors IGBT (Transistor Bipolaire à Gâchette Isolée), chacun des transistors IGBT étant commandé de manière à assurer ou à interdire le passage du courant des différentes alternances des trois phases du courant alternatif de l'alternateur 7.

Sur la figure 2, on a représenté une unité 20 de régulation et de commande numérique qui permet de piloter chacun des transistors IGBT du redresseur MLI 15. On a représenté, sous la forme de la flèche 21, l'ensemble des commandes des transistors du redresseur 15 à modulation de largeur d'impulsions.

L'onduleur 17 est réalisé sous une forme analogue au redresseur 15 et présente une disposition de ses composants inverse de celle du redresseur 15, de manière qu'il puisse transformer un courant continu par impulsions modulées en un courant alternatif triphasé présentant une tension et une fréquence parfaitement contrôlées, et qu'on puisse fournir ainsi au réseau 13, par l'intermédiaire du transformateur 14, un courant alternatif triphasé présentant une tension et une fréquence parfaitement fixes, cette fréquence étant par exemple de 50 Hz pour une distribution sur le réseau français.

L'onduleur 17 est commandé par le module de régulation et de commande numérique 20, comme schématisé par la flèche 22.

Le module de régulation et de commande 20 reçoit comme donnée d'entrée venant de l'alternateur 7 (entrée symbolisée par la ligne de liaison 23) l'intensité I et la tension U du courant électrique dans chacune des phases en sortie de l'alternateur 7 ainsi que la vitesse de rotation ω du rotor de l'alternateur qui est mesurée par un dispositif de mesure de rotation de type connu.

Les mesures parviennent au module de régulation et de commande 20 sous la forme de signaux. Il est à remarquer que la vitesse de rotation ω du rotor est également la vitesse de rotation de la partie tournante 5, 6 de l'éolienne.

Le module de régulation et de commande 20 reçoit également, comme schématisé par la flèche 24, un signal représentatif de la tension continue dans le bus 18.

Sur chacune des phases en sortie de l'onduleur 17 est disposé un moyen 26 de mesure de l'intensité du courant de la phase correspondante et entre deux phases en sortie de l'onduleur 17 est également disposé un transformateur 27 de mesure de la tension du courant triphasé.

Les signaux d'intensité et de tension correspondants sont transmis au module de régulation et de commande 20, comme schématisé par la ligne de liaison 25.

Le module de régulation et de commande 20 est également relié au hacheur rhéostatique 16 pour assurer la commande du hacheur rhéostatique, comme indiqué par la ligne de liaison et la flèche 28.

De manière générale, à partir des signaux de mesure de la tension U du courant produit par l'alternateur et des signaux des courants I dans chacune des phases ainsi que d'un signal représentatif de la vitesse de rotation de l'ensemble rotatif de l'éolienne comprenant le rotor 8 de l'alternateur 7, le module de régulation et de commande numérique 20 assure une modulation du courant continu par impulsions produit dans le redresseur MLI 15.

Comme indiqué plus haut, cette modulation consiste à régler la largeur des impulsions de courant continu dont la fréquence reste fixe et égale par exemple à 1000 Hz.

Cette modulation de la largeur des impulsions de courant continu produit dans le redresseur permet, par réaction, de régler les amplitudes des intensités et de la tension du courant produit par l'alternateur, ainsi que le déphasage ϕ de la tension U par rapport à l'intensité I du courant.

On peut ainsi régler, par modulation du courant continu produit par le redresseur, les paramètres de fonctionnement électrique de l'alternateur 7, soit pour obtenir un fonctionnement électrique idéal de l'alternateur 7, soit pour régler la vitesse de rotation ω de l'ensemble tournant de l'éolienne comportant le rotor de l'alternateur 7, par l'intermédiaire du couple résistant de l'alternateur.

L'onduleur commandé par l'unité de régulation et de commande 20 qui reçoit un signal représentatif des intensités et tensions du courant à la sortie de l'onduleur 17 permet de réguler, par modulation de largeur d'impulsions, le courant alternatif triphasé à la sortie de l'onduleur 17.

Il est à remarquer que la transformation du courant alternatif produit par l'alternateur 7 en courant continu dans le redresseur 15 et la conversion ultérieure du courant continu en courant alternatif dans l'onduleur 17 permet de dissocier complètement les conditions de production du courant alternatif à la sortie de l'alternateur qui dépendent de la vitesse de l'éolienne des conditions de production du courant alternatif à la sortie de l'onduleur qui deviennent totalement indépendantes de la vitesse de rotation de la partie tournante de l'éolienne. On peut ainsi fournir au réseau, par l'intermédiaire du transformateur 14, un courant électrique sous une tension et une fréquence parfaitement fixes, la tension et la fréquence du courant produit par l'alternateur étant, en revanche, essentiellement variables en fonction du vent entraînant l'éolienne.

La mesure de la tension U et de l'intensité I, en sortie de l'alternateur 7 permet d'obtenir les fluctuations au cours du temps de la puissance fournie par l'alternateur. Ces fluctuations peuvent être utilisées, dans l'unité de commande 20, pour anticiper la commande de l'onduleur 17, afin de limiter les fluctuations de la tension dans le bus continu 18.

Les signaux relatifs aux paramètres du courant alternatif triphasé fourni au réseau d'utilisation 13 et transmis à l'unité de régulation et de commande 20 par la ligne de liaison 25 permettent également d'envisager d'anticiper le réglage du hacheur, en fonction de perturbations du courant dans le réseau.

La tension dans le bus continu 18 est mesurée et transmise à l'unité de régulation et de commande sous la forme d'un signal qui permet à l'unité 20 de commander le hacheur rhéostatique 16, de manière à réguler la transmission du courant continu à l'onduleur 17.

Dans le cas où le courant n'est plus évacué de manière régulière par le réseau à la sortie de l'onduleur 17, la tension augmente dans le bus continu 18 et l'unité de régulation 20 commande le hacheur rhéostatique 16, de manière à découper le courant produit et à ne laisser passer qu'une partie du courant continu, le courant résiduel étant dérivé sur le rhéostat 29 du hacheur rhéostatique 16. On absorbe ainsi l'énergie excédentaire produite par l'éolienne, lors d'une défaillance du réseau. Ce réglage peut être anticipé grâce aux mesures effectuées en sortie de l'onduleur 17 et transmises à l'unité de régulation et de commande 20.

Au cours de son fonctionnement, l'éolienne est pilotée suivant deux phases successives distinctes de réglage, en fonction de la vitesse de rotation de l'ensemble rotatif de l'éolienne qui est elle-même fonction de la vitesse du vent.

Pour les basses vitesses du vent, jusqu'au voisinage d'une vitesse maximale ou vitesse nominale, c'est-à-dire depuis la vitesse de démarrage de l'éolienne pour la production d'énergie électrique, cette vitesse pouvant être très faible, jusqu'à une vitesse du vent entraînant l'ensemble rotatif à la vitesse nominale (définie pour une puissance donnée, par exemple 25 tours/minute), on règle les paramètres électriques de l'alternateur et, par leur intermédiaire, la vitesse de rotation du rotor et de l'ensemble rotatif et le couple sur le rotor, de manière que les points de fonctionnement se situent sur une courbe couple-vitesse parfaitement définie. Cette courbe présente sensiblement la forme d'une droite faiblement inclinée, le couple augmentant très peu depuis les plus faibles vitesses de rotation jusqu'à la vitesse maximale.

La vitesse de rotation de l'ensemble rotatif comportant le rotor de l'alternateur peut être facilement régulée à partir du couple résistant imposé par l'alternateur dépendant lui-même des paramètres électriques du courant à la sortie de l'alternateur, ces paramètres étant réglés par modulation du redresseur.

On va maintenant montrer comment la maîtrise de la vitesse de rotation de l'ensemble rotatif de l'éolienne permet de faire fonctionner l'éolienne, pendant cette première phase, de manière optimale avec une transmission d'énergie maximale, en fonction de la vitesse du vent.

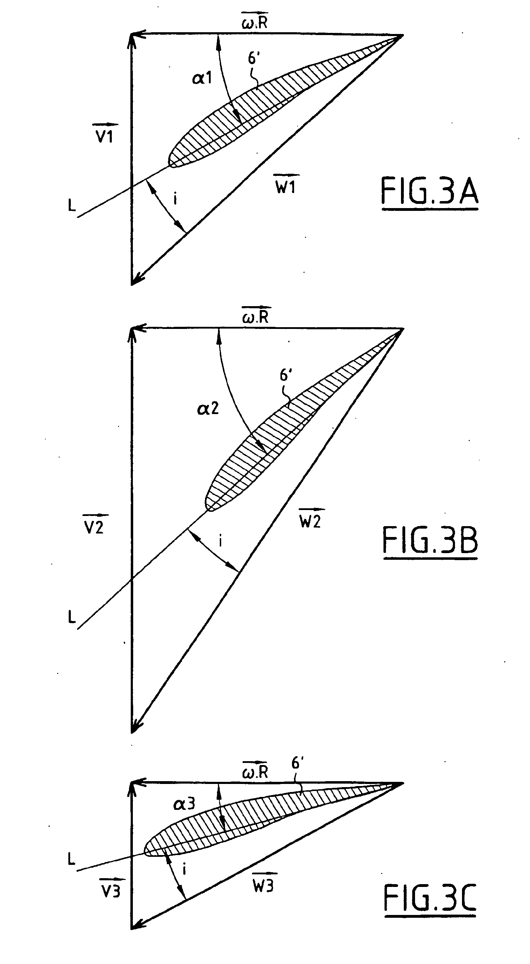

A titre de comparaison, on a représenté sur les figures 3A, 3B et 3C les diagrammes de vitesse suivant le profil d'une pale 6' d'une éolienne selon l'art antérieur comportant un ensemble rotatif dont les pales comportent un moyen de réglage continu de l'angle de calage.

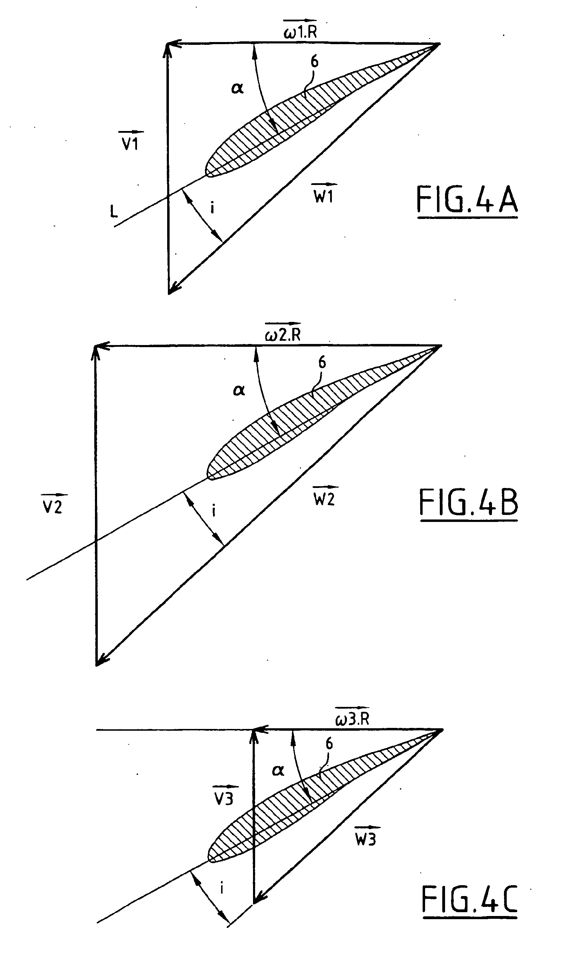

Sur les figures 4A, 4B et 4C, on a représenté les diagrammes correspondants dans le cas d'une pale 6 montée fixe sur la partie rotative de l'éolienne qui est régulée par le procédé de l'invention.

Sur les figures 3A, 3B et 3C ainsi que sur les figures 4A, 4B et 4C, les vecteurs *̅V̅*̅1̅, *̅V̅*̅2̅ et *̅V̅*̅3̅ représentent la vitesse du vent auquel est soumise l'éolienne au cours de trois phases d'utilisation, *̅V̅*̅1̅ correspondant à un vent moyen, *̅V̅*̅2̅ à un vent fort et *̅V̅*̅3̅ à un vent faible.

Les vecteurs ω̅*̅R̅*̅ sur les figures 3A, 3B et 3C représentent la vitesse linéaire d'une pale à une distance R de l'axe de rotation, ou rayon, pour une vitesse de rotation ω de l'ensemble rotatif de l'éolienne, cette vitesse de rotation ω étant réglée à une valeur constante et égale à la vitesse nominale de fonctionnement de l'éolienne (pour une puissance donnée), quelle que soit la vitesse du vent.

Sur les figures 4A, 4B et 4C, les vecteurs ω̅1̅*R*, ω̅2̅*R* et ω̅3̅*R* représentent les vitesses linéaires des pales de l'éolienne régulée suivant le procédé de l'invention, au cours des trois phases à vent moyen, fort et faible, les vitesses de rotation ω1, ω2 et ω3 étant modulées par commande du redresseur MLI de l'électronique de puissance, comme expliqué plus haut.

Les vecteurs *̅W̅*̅1̅, *̅W̅*̅2̅ et *̅W̅*̅3̅ représentent, aussi bien sur les figures 3A, 3B et 3C que sur les figures 4A, 4B et 4C, la résultante des vitesses du vent et des pales de l'ensemble rotatif de l'éolienne, au cours des trois phases considérées.

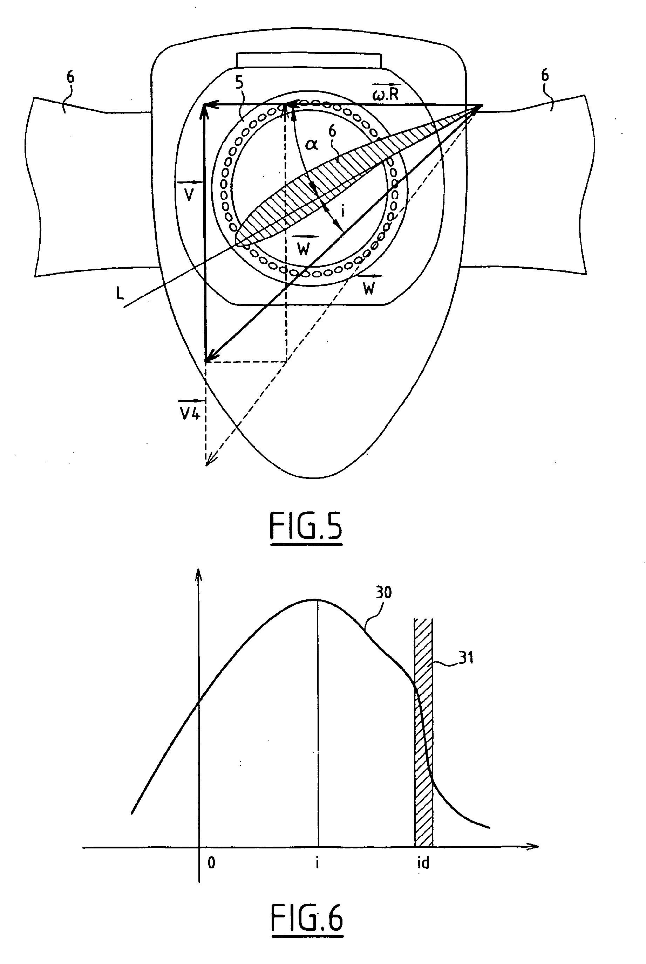

On a de plus représenté, sur l'ensemble des diagrammes, la direction longitudinale L de la section de la pale 6 ou 6', la résultante de la vitesse du vent et de la pale en rotation faisant avec la direction longitudinale L de la section de la pale 6 ou 6', un angle d'incidence i en fonction duquel la performance f = Cz/Cx de la pale considérée varie comme représenté sur la figure 6. Du fait que les pales sont vrillées, l'angle (α1, α2, α3 ou α) entre la direction longitudinale L de la pale et le vecteur vitesse de la pale varie le long de la pale. L'angle d'incidence n'est donc pas constant suivant la longueur de la pale.

On voit sur la figure 6 que la courbe 30 représentant les variations de la performance f = Cz/Cx de la pale d'une éolienne en fonction de l'angle d'incidence i augmente tout d'abord lorsque i est croissant jusqu'à une valeur i optimal pour laquelle la performance de l'aube atteint un maximum. La performance de l'aube décroît ensuite, lorsque i augmente, d'abord de manière modérée, puis très rapidement, dans une zone 31 correspondant à une zone de décrochage de la partie tournante de l'éolienne, la puissance fournie par l'éolienne s'effondrant jusqu'à une valeur très faible, ou même pratiquement nulle.

Il est donc nécessaire, pour obtenir un bon rendement en puissance de l'ensemble rotatif de l'éolienne, de fonctionner avec des valeurs de l'angle d'incidence i proches de la valeur i optimal rendant la performance des pales maximale.

Dans le cas d'une éolienne fonctionnant suivant le système "pitch" à réglage continu de l'orientation des pales, on obtient un angle i sensiblement constant et égal à l'angle d'incidence i optimal quelle que soit la vitesse du vent (dans certaines limites) en faisant tourner l'aube dans un sens ou dans l'autre.

Lorsqu'on passe d'un vent à vitesse moyenne *̅V̅*̅1̅ à un vent à forte vitesse *̅V̅*̅2̅, on fait tourner la pale 6', de manière à augmenter l'angle de la direction longitudinale L de la pale avec le vecteur vitesse de la pale ω̅*̅R̅*̅ (l'angle passe de la valeur α1 à la valeur α2), de sorte que l'angle d'incidence i reste constant.

Dans le cas où l'on passe d'un vent à vitesse moyenne *̅V̅*̅1̅ à un vent à vitesse faible *̅V̅*̅3̅, on fait tourner la pale 6', de manière à faire décroître l'angle entre la direction L et le vecteur vitesse ω̅*̅R̅*̅ de la pale, cet angle passant de la valeur α1 à la valeur α3, de manière que l'angle d'incidence i reste pratiquement constant.

On a indiqué plus haut les inconvénients d'un tel dispositif dans lequel il est nécessaire de faire tourner les pales dont le pied est monté rotatif sur le moyeu de l'éolienne par l'intermédiaire d'un roulement.

Dans le cas d'un procédé de régulation suivant l'invention, comme représenté sur les figures 4A, 4B et 4C, il est possible de régler la vitesse de rotation ω et donc la vitesse linéaire ωR de la pale, en fonction de la vitesse du vent, pour maintenir l'angle d'incidence i pratiquement constant et égal à la valeur optimale.

Dans le cas où l'on passe d'un vent à vitesse moyenne V1 à un vent à forte vitesse V2, on laisse la vitesse de la pale croître jusqu'à une valeur ω2R qui est imposée par le couple résistant de l'alternateur dont les paramètres électriques sont réglés par modulation du courant continu produit par le redresseur de l'électronique de puissance. La valeur ω2R de la vitesse de rotation de la pale peut être ajustée de manière que l'angle d'incidence i (et l'angle α de la pale avec le vecteur vitesse de la pale) reste pratiquement constant, l'angle d'incidence i restant à sa valeur optimale.

Lorsqu'on passe d'un vent à vitesse moyenne V1 à un vent à faible vitesse V3, on fait décroître la vitesse de rotation de l'ensemble rotatif de l'éolienne jusqu'à une valeur ω3R telle que les angles i et α restent constants, l'angle i étant à sa valeur optimale.

La diminution de la vitesse de l'ensemble rotatif et de la partie tournante de l'éolienne est obtenue en réglant les paramètres électriques à la sortie de l'alternateur, par modulation du courant continu produit par le redresseur MLI, de telle sorte qu'on augmente le couple résistant de l'alternateur.

Dans la première phase de fonctionnement de l'éolienne, la vitesse du vent passant d'une valeur faible, correspondant au démarrage de l'éolienne en production électrique, à une valeur maximale acceptable par l'éolienne, correspondant à la vitesse nominale de l'ensemble rotatif de l'éolienne, on laisse croître la vitesse de rotation de l'éolienne de manière à maintenir le point de fonctionnement des pales au voisinage du maximum de la courbe de performances des pales. Comme indiqué plus haut, le couple sur le rotor croît faiblement.

Lorsqu'on atteint la vitesse nominale de rotation de l'ensemble rotatif de l'éolienne (par exemple 25 tours/minute), cette valeur étant obtenue pour une valeur de seuil de la vitesse du vent, on réalise une régulation de la vitesse de rotation à une valeur fixe qui est la vitesse nominale de l'éolienne, le couple augmentant alors de manière très rapide, dès qu'on a atteint la vitesse nominale.

Sur un diagramme couple en fonction de la vitesse, cette phase se traduit par une courbe de variation du couple qui est pratiquement parallèle à l'axe des couples et perpendiculaire à l'axe des vitesses.

En se reportant à la figure 5, sur laquelle on a représenté la partie tournante 5, 6 d'une éolienne et le diagramme de vitesse suivant la section d'une pale 6, on supposera que le vecteur ω̅*̅R̅*̅ correspond à la vitesse de rotation nominale de la partie tournante 5, 6 de l'éolienne, pour la vitesse du vent V.

Si la vitesse du vent augmente au-delà de la valeur V (par exemple atteint la vitesse V4), la vitesse ωR restant constante, l'angle d'incidence i augmente, jusqu'à la valeur i_{d} correspondant au décrochage sur la courbe de la figure 6. On obtient ainsi un stall à une vitesse du vent qui est déterminée par la valeur de la vitesse nominale ω. En réalité, du fait que l'angle d'incidence i varie avec le rayon R, on obtient un décrochage progressif de la pale, lorsque le vent augmente.

Lorsqu'on veut changer la vitesse à laquelle se produit le décrochage, on peut modifier la vitesse de rotation nominale ω, par exemple en augmentant la vitesse de rotation pour augmenter la vitesse de décrochage ou en diminuant la vitesse de rotation pour diminuer la vitesse de décrochage.

On obtient ainsi un stall à vitesse variable par une simple modification de la commande du redresseur de l'électronique de puissance associée à l'alternateur de l'éolienne.

On peut faire passer la vitesse nominale, par exemple d'une valeur d'été à une valeur d'hiver, sans avoir à effectuer un nouveau calage des pales de la partie tournante de l'éolienne.

On peut ainsi adapter facilement le stall de l'éolienne aux conditions climatiques et en particulier effectuer un changement de la vitesse nominale de l'ensemble rotatif de l'éolienne, entre une valeur d'été et une valeur d'hiver, ou inversement.

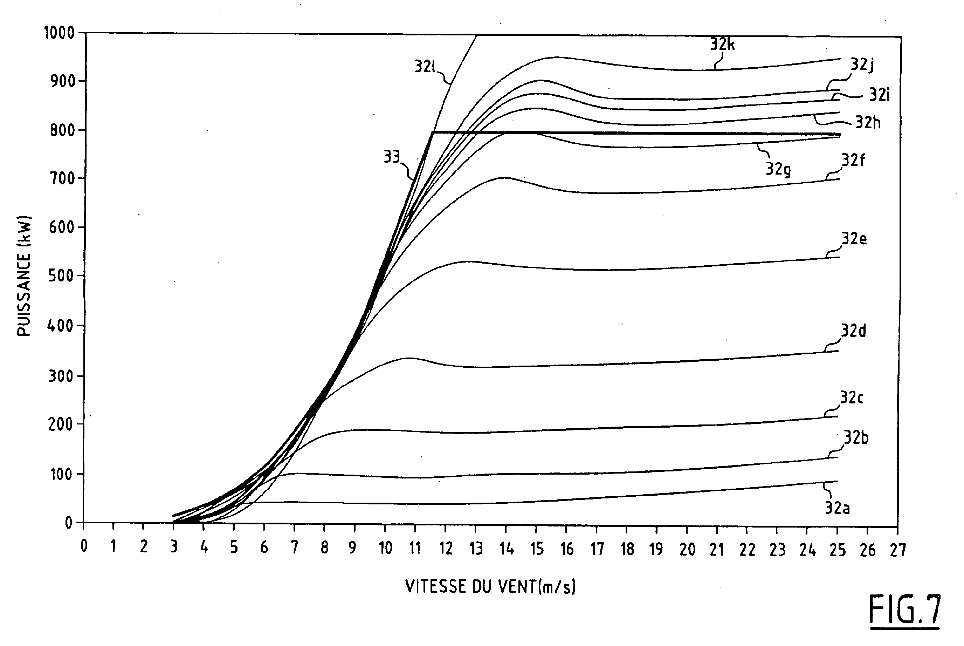

Sur la figure 7, on a représenté un ensemble de courbes 32a, 32b, 32c, 32d, 32 e, 32f, 32g, 32h, 32i, 32j, 32k, 32l montrant les variations de la puissance mécanique fournie par l'éolienne en fonction de la vitesse du vent entraînant la partie tournante de l'éolienne en rotation et pour des vitesses de rotation nominales imposées respectivement de 9 ; 12 ; 15 ; 18 ; 21 ; 23 ; 24 ; 24,5 ; 24,8 ; 25 ; 25,5 et 28 tours/minute.

On a de plus représenté une courbe 33 correspondant à un réglage optimisé de la vitesse de rotation quelle que soit la vitesse du vent, pour obtenir un fonctionnement optimal de l'éolienne, avec un palier à une puissance nominale de 800 kW.

Pour obtenir une puissance mécanique de l'éolienne de 800 kW (c'est-à-dire la puissance disponible sur la partie tournante entraînée par le vent), la figure 7 montre qu'on peut fixer la vitesse nominale de rotation à 24 tours/minute dès que la vitesse du vent atteint un premier seuil à 9 m/sec. Entre la vitesse de démarrage de la partie tournante et 9 m/s, la vitesse de rotation de la partie tournante de l'éolienne augmente suivant une courbe couple/vitesse bien définie, de manière à optimiser la puissance. Au-dessus de la vitesse du vent de 9 m/s, on régule la vitesse pour la maintenir à la valeur de 24 tours/minute par modulation du courant continu obtenu à partir du courant produit par l'alternateur. La puissance mécanique fournie par l'éolienne évolue en fonction de la vitesse du vent, comme représenté par la courbe 32g. On voit que la puissance de 800 kW n'est obtenue que pour deux vitesses du vent (14 et 25 m/s). Entre les vitesses de 14 et 25 m/s, la puissance fléchit légèrement, de sorte qu'on n'obtient pas un palier de puissance à 800 kW. On peut également, dans la seconde phase de fonctionnement de l'éolienne, régler la vitesse de rotation de l'éolienne pour obtenir un palier de puissance à 800 kW. On effectue alors une régulation de la puissance à vitesse de rotation variable, de manière que la puissance mécanique fournie par l'éolienne soit constante pour des vitesses du vent allant de 11,5 à 25 m/s, comme représenté par la courbe 33. Entre le premier et le second seuils de la vitesse du vent (9 à 14 m/s), on fait croître la vitesse de rotation de l'ensemble rotatif de manière progressive et régulée. En effet, cette zone est une zone de transition d'accrochage et de décrochage des pales dans laquelle on doit piloter prudemment l'éolienne. On utilise généralement un logiciel de pilotage tout en enregistrant les variations de la vitesse de rotation pour enrichir la base de données relative aux montées à la puissance de 800 kW effectuées sur le site de l'éolienne, qui dépendent des conditions climatiques rencontrées. Ces données sont utilisées lors de montées en vitesse et en puissance ultérieures de l'éolienne. On obtient donc une auto-adaptation.

On réalise le contrôle de la vitesse entre les deux seuils de la vitesse du vent de manière à obtenir un maximum de puissance. Ce contrôle est appelé contrôle agressif. La courbe 33 correspond au fonctionnement optimisé de l'éolienne, pour toutes les vitesses du vent.

Au-dessus du second seuil de la vitesse du vent (14 m/s), il n'y a plus de risque d'emballement de l'ensemble rotatif et on effectue une adaptation continue de la vitesse de rotation pour obtenir une puissance de 800 kW.

Le procédé suivant l'invention permet d'adapter la vitesse de rotation, de manière très souple, par des moyens électroniques.

Les paramètres électriques en sortie de l'alternateur 7 sont réglés de manière que l'alternateur présente des conditions de fonctionnement optimales. Dans ces conditions, l'intensité I du courant de l'alternateur et la tension interne ou tension à vide E de l'alternateur sont parfaitement en phase. On règle donc en permanence les conditions électriques pour obtenir un déphasage nul entre l'intensité et la tension interne de l'alternateur, en réglant le déphasage intensité-tension, compte tenu de l'inductance de l'alternateur.

Le procédé suivant l'invention permet donc, par un simple réglage du courant continu produit par le redresseur MLI, d'obtenir des conditions électriques et mécaniques idéales de fonctionnement de l'alternateur et de l'éolienne.

Dans la zone de décrochage, le réglage de la vitesse par le procédé de l'invention peut permettre d'obtenir une puissance parfaitement constante. On évite ainsi d'avoir à surdimensionner l'éolienne pour encaisser des surpuissances locales.

Après un décrochage par effet stall à une certaine vitesse du vent, on peut restaurer la capacité de l'éolienne à fonctionner à la puissance nominale, en jouant sur la vitesse de rotation de la partie tournante.

En se reportant à la figure 5, on peut également expliquer comment est réalisé l'arrêt électrique normal de l'éolienne, c'est-à-dire le freinage électrique de l'éolienne entre sa vitesse nominale et une vitesse sensiblement nulle.

En supposant la vitesse du vent V constante pendant l'arrêt électrique de l'éolienne, cet arrêt est obtenu en réglant le couple résistant de l'alternateur pour diminuer progressivement la vitesse ω de rotation de l'ensemble rotatif de l'éolienne.

Le freinage électrique de l'éolienne à partir du couple résistant de l'alternateur est obtenu de manière très progressive, en imposant un couple supérieur au couple nominal dans une proportion relativement faible, par exemple de l'ordre de 10 %. A titre de comparaison, dans le cas des dispositifs antérieurs, il est nécessaire de doubler le couple résistant pour obtenir un effet de freinage de l'éolienne à partir de la vitesse nominale.

Dans le cas du freinage électrique réalisé selon l'invention, l'effet stall s'ajoute très rapidement à la diminution de la vitesse par freinage électrique à partir du couple résistant de l'alternateur, pour entraîner une diminution de la puissance de l'éolienne qui passe de sa valeur nominale à une valeur pratiquement nulle.

En effet, comme il est visible sur la figure 5, lorsqu'on diminue la vitesse ω, la vitesse du vent V étant constante, la résultante *̅W̅*̅ de la vitesse du vent et de la vitesse linéaire ω̅*̅R̅*̅ fait un angle d'incidence i croissant avec la direction longitudinale L des pales de l'éolienne. On atteint ainsi des conditions de stall, lorsque l'angle i atteint la valeur i_{d} de décrochage.

La diminution de la vitesse ω par freinage électrique est réalisée progressivement, de manière qu'on puisse évacuer la puissance excédentaire dans le réseau 13 relié à l'éolienne, sans que la tension dans le bus à courant continu 18 ne parvienne au niveau de déclenchement du hacheur rhéostatique 16.

Les conditions de production de courant alternatif triphasé par l'onduleur 17 à partir du courant continu sont telles qu'on peut régler les paramètres du courant triphasé envoyé sur le réseau 13, indépendamment du fonctionnement de l'alternateur 7 qui est lui-même régulé par le redresseur MLI 15.

C'est ainsi qu'on peut faire fonctionner l'éolienne, soit en génératrice de courant classique, le cosinus ϕ du courant pouvant être adapté à la demande de l'exploitant, ou encore en compensateur synchrone, l'éolienne fournissant au réseau 13 une puissance réactive en quantité voulue pour satisfaire la demande de l'exploitant du réseau 13.

On évite ainsi de placer des unités de compensation sur le réseau 13, dans le cas d'une demande de courant réactif.

Il est à remarquer que l'onduleur 17 fonctionne d'une manière analogue au redresseur MLI 15, en sens inverse, l'onduleur 17 produisant à partir d'un courant continu par impulsions fourni par le bus continu 18 un courant alternatif triphasé dont les paramètres électriques peuvent être réglés à partir de la ligne de commande 22 de l'onduleur reliée à l'unité de régulation et de commande 20.

Du fait que la réalisation de l'électronique de puissance 12 associée à l'éolienne est entièrement symétrique, le redresseur 15 et l'onduleur 17 disposé de part et d'autre du hacheur 16 pouvant fonctionner de manière réversible, il est possible d'utiliser le réseau 13 pour alimenter, par l'intermédiaire du transformateur 14, l'onduleur 17 qui fonctionne alors en redresseur et fournit en sortie un courant continu par impulsion qui est transmis par le bus 18 relié au hacheur 16, au redresseur 15 qui fonctionne alors en onduleur pour fournir un courant alternatif à l'alternateur 7 qui fonctionne alors en moteur synchrone d'entraînement de la partie tournante 5, 6 de l'éolienne.

Lorsque l'éolienne est à l'arrêt, on peut faire passer sa vitesse à une vitesse de démarrage de l'alternateur 7 en pilotant le redresseur 15 fonctionnant en onduleur et alimenté en courant continu par l'intermédiaire du réseau et de l'onduleur 17 fonctionnant en redresseur.

On peut ainsi réaliser des conditions de démarrage très souples avec un couplage au réseau idéal, le fonctionnement de l'éolienne et de l'alternateur 7 en production d'énergie électrique n'étant enclenché qu'au moment où l'on a atteint une vitesse idéale de démarrage de l'alternateur, cette vitesse pouvant être relativement faible du fait des possibilités de commande de l'éolienne à vitesse variable et croissante pendant sa première phase de fonctionnement pour atteindre la vitesse nominale, comme il a été indiqué plus haut.

On peut ainsi concevoir des pales dont le profil est réalisé tout à fait indépendamment des conditions de démarrage de l'éolienne. Les pales d'une éolienne comportent généralement un pied de pale cylindrique fixé sur le moyeu et une partie profilée dont le profil s'affine, dans la direction longitudinale de la pale, lorsqu'on s'éloigne du pied de pale. Pour obtenir un couple de démarrage suffisant, il est nécessaire de concevoir des pales dont la partie profilée présente une largeur importante (dans une direction radiale telle que L sur la figure 5), au voisinage de la partie cylindrique de raccordement au moyeu.

Lorsqu'on peut réaliser un démarrage de l'éolienne en utilisant l'alternateur comme moteur, il devient possible d'utiliser des pales dont la partie profilée a une largeur moindre dans sa zone proche de la partie cylindrique de raccordement au moyeu. On limite ainsi les efforts exercés par le vent sur les pales dont la partie la plus large au voisinage du cylindre de raccordement au moyeu offre une plus grande résistance au vent. Les pales résistent donc mieux aux vents forts et il devient possible d'envisager un allégement des structures en aval des pales (en particulier du moyeu, de la nacelle et du mât).

Lorsque l'éolienne est à l'arrêt, le procédé et le dispositif de conduite de l'éolienne suivant l'invention permettent de disposer d'un moyen idéal de réglage des conditions de maintien de l'éolienne à l'arrêt, lorsque le rotor est un rotor à aimants permanents.

L'alternateur comportant un rotor à aimant permanent dispose de moyens de couplage tels qu'un ou plusieurs commutateurs qui permettent de relier les phases de l'alternateur entre elles.

Après un arrêt normal (ou incidentel) de l'ensemble rotatif de l'éolienne, on bascule le commutateur, de telle sorte que la mise en court circuit de l'alternateur dont le rotor à aimant permanent continue à exercer un champ magnétique produit un couple résistant qui s'oppose à une montée en vitesse de rotation de l'ensemble rotatif de l'éolienne. De ce fait, on produit très rapidement un décrochage des pales de la partie tournante de l'alternateur, comme il a été expliqué en regard de la figure 5. Le décrochage est d'autant plus rapide et important que le vent est plus fort. Le vent ne peut donc exercer qu'un couple très limité sur le rotor et l'ensemble rotatif de l'éolienne, ce qui se traduit par une rotation à très faible vitesse de l'ensemble tournant. Ce fonctionnement à très faible vitesse est parfaitement stable du fait du freinage électrique de l'alternateur et du décrochage des pales qui s'accroît dès que le vent devient plus fort. On obtient donc ainsi une sécurisation parfaite de l'arrêt de production de l'éolienne, l'ensemble rotatif tournant alors à une vitesse sensiblement inférieure à la vitesse de rotation pour la production d'énergie électrique (par exemple deux à trois tours par minute). Cette légère rotation de l'alternateur permet d'éviter de marquer les pistes du roulement du palier du rotor, les éléments tournants du palier se déplaçant suivant toute la périphérie des pistes du roulement.

La très faible puissance électrique produite par l'alternateur pendant cette rotation à faible vitesse qui se dissipe dans les bobinages du stator de l'alternateur permet de maintenir l'alternateur en température, ce qui évite tout problème de condensation sur les éléments de l'alternateur, quelle que soient les conditions atmosphériques.

Le hacheur rhéostatique 16 placé en parallèle sur le bus à courant continu 18 relié à la sortie du redresseur MLI 15 et à l'entrée de l'onduleur MLI 17 permet de réguler la transmission de puissance électrique entre l'alternateur et le réseau.

Lorsque le réseau 13 ne peut pas évacuer toute la puissance fournie par l'alternateur 7, la tension dans le bus continu 18 augmente et un signal correspondant est envoyé par la ligne 24 à l'unité de régulation et de commande numérique 20. L'unité de régulation et de commande 20 transmet un signal de commande au hacheur rhéostatique par la ligne 28, de manière que le hacheur rhéostatique 16 réalise un découpage du courant continu et évacue sur le rhéostat 29 une partie de la puissance électrique, de manière à équilibrer la transmission de puissance entre l'alternateur et le réseau.

En particulier, le hacheur rhéostatique 16 peut être utilisé pour évacuer de l'énergie transitoire en provenance du redresseur MLI, dans le cas d'une défaillance du réseau de courte durée, telle qu'une micro coupure d'une durée inférieure à une seconde, ou encore dans le cas d'un dysfonctionnement de l'onduleur, ou lors d'un arrêt incidentel de l'éolienne.

Dans le cas d'une micro coupure apparaissant sur le réseau 13, c'est-à-dire une coupure du réseau d'une durée typiquement inférieure à une seconde, le réseau ne peut plus évacuer la puissance électrique provenant de l'électronique de puissance 12 et la tension dans le bus à courant continu 18 augmente, du fait que le redresseur MLI continue à fournir du courant continu obtenu par conversion du courant alternatif de l'alternateur 7.

L'unité de commande 20 reçoit l'information de la montée en tension du bus continu 18 par la ligne 24 et transmet un ordre d'activation au hacheur 16 par la ligne 28. Le hacheur évacue une partie de la puissance électrique qui lui parvient par le bus à courant continu 18 sur le rhéostat 29. On revient à un seuil de puissance minimal déterminé et si ce seuil de puissance se maintient, le fonctionnement normal de l'éolienne reprend.

Si la puissance continue à augmenter au-dessus du seuil déterminé, du fait d'une persistance du défaut du réseau 13, on réalise une nouvelle opération d'absorption de puissance dans le rhéostat 29 du hacheur électrostatique.

Lorsque le défaut persiste pendant une durée typiquement supérieure à une seconde, on réalise un arrêt incidentel de l'éolienne.

Dans le cas d'un incident ou accident se traduisant par un défaut durable du réseau 13 ou de l'onduleur 17, on réalise un arrêt de l'éolienne, par enclenchement de la procédure d'arrêt par freinage électrique qui a été décrite plus haut et par freinage mécanique.

A la différence d'un arrêt normal, dont le déroulement progressif peut être programmé de manière à évacuer la puissance sur le réseau, lors d'un arrêt incidentel ou accidentel, on évacue la puissance produite par l'alternateur et transmise par le redresseur, dans le rhéostat 29 du hacheur.

Le freinage est assuré jusqu'au décrochage de l'ensemble rotatif de l'éolienne, comme décrit précédemment.

L'invention ne se limite pas strictement au mode de réalisation qui a été décrit.

C'est ainsi que l'électronique de puissance peut comporter des éléments différents de ceux qui ont été indiqués plus haut, à partir du moment où cette électronique de puissance effectue dans une phase intermédiaire, la conversion du courant alternatif de l'alternateur de l'éolienne en courant continu en utilisant un moyen dont le courant peut être modulé pour réguler par réaction les paramètres électriques à la sortie de l'alternateur.

L'alternateur de l'éolienne peut être différent d'un alternateur ayant un rotor à aimants permanents. Toutefois, pour la mise en oeuvre de l'invention, le rotor de l'alternateur doit permettre un contrôle de couple. Le rotor peut être un rotor bobiné comportant des enroulements électriques et par exemple réalisé sous la forme d'un rotor bobiné de type synchrone. Dans le cas d'un rotor à aimants permanents, on obtient un avantage complémentaire, puisqu'on peut réaliser un freinage de la partie tournante de l'éolienne à l'arrêt.

L'alternateur et l'éolienne peuvent être de tout type et présenter toute puissance. Le procédé et le dispositif suivant l'invention sont bien adaptés en particulier au cas d'éoliennes et d'alternateurs de forte puissance, par exemple de puissances proches de 1 MW ou supérieures.

## Revendications

1. Procédé de régulation d'une installation de production d'énergie électrique comportant un alternateur électrique (7) ayant un rotor (8) solidaire de la partie tournante (5, 6) d'une éolienne, pour constituer un ensemble rotatif, et une électronique de puissance (12) comportant un moyen (15) de conversion du courant alternatif produit par l'alternateur (7), en courant continu, **caractérisé par le fait qu'**on règle les caractéristiques électriques du courant électrique produit par l'alternateur (7) et la vitesse de rotation de l'ensemble rotatif, par modulation du courant continu produit par le moyen de conversion (15) de l'électronique de puissance (12) à partir du courant électrique produit par l'alternateur (7).

2. Procédé de régulation suivant la revendication 1, **caractérisé par le fait que**, dans une première phase de fonctionnement de l'installation de production d'énergie électrique, pour des vitesses faibles du vent, on fait croître la vitesse de rotation de l'ensemble rotatif (5, 6, 8) de l'éolienne, de manière que la vitesse de rotation passe progressivement d'une valeur faible de démarrage à une valeur maximale, le couple sur le rotor étant croissant, suivant une loi de variation vitesse/couple prédéterminée.

3. Procédé suivant la revendication 2, **caractérisé par le fait que**, dans une seconde phase de fonctionnement, lorsque la vitesse du vent est supérieure à une première valeur de seuil, on régule la vitesse de rotation de l'ensemble rotatif (5, 6, 8) de l'éolienne à une valeur maximale fixe, ou valeur nominale, permettant d'obtenir une récupération de puissance optimale de l'éolienne.

4. Procédé suivant la revendication 2, **caractérisé par le fait que**, dans une seconde phase de fonctionnement de l'éolienne, lorsque la vitesse du vent est supérieure à une seconde valeur de seuil, on régule la vitesse maximale de rotation de l'ensemble rotatif (5, 6, 8) de l'éolienne, de manière à maintenir la puissance de l'éolienne à une valeur fixe et, de préférence, à la valeur maximale de la puissance acceptable par l'éolienne.

5. Procédé suivant l'une quelconque des revendications 1, 2, 3 et 4,
**caractérisé par le fait qu'**on règle les caractéristiques électriques du courant électrique produit par l'alternateur, de manière que la tension interne à vide de l'alternateur soit en phase avec l'intensité du courant.

6. Procédé suivant l'une quelconque des revendications 2 à 5, **caractérisé par le fait qu'**on règle la vitesse maximale de rotation de l'ensemble rotatif (5, 6, 8) de l'éolienne à une valeur permettant un décrochage des pales (6) de la partie tournante (5, 6) de l'éolienne, pour une vitesse de vent déterminée.

7. Procédé suivant la revendication 4, **caractérisé par le fait que**, lorsque la vitesse du vent est inférieure à la seconde valeur de seuil, on fait croître la vitesse de rotation de l'ensemble rotatif, de manière progressive et régulée et on enregistre les variations de la valeur de la vitesse de rotation, de manière à utiliser ultérieurement la courbe de variation de la vitesse de rotation pour contrôler la montée en vitesse de l'ensemble rotatif.

8. Procédé suivant la revendication 3, **caractérisé par le fait qu'**on fixe la valeur nominale de la vitesse de rotation à une valeur prise parmi au moins deux valeurs, en fonction de conditions climatiques sur le site de l'éolienne et en particulier à une première valeur en période d'été et à une seconde valeur en période d'hiver.

9. Procédé suivant l'une quelconque des revendications 1 à 8, **caractérisé par le fait qu'**on utilise un moyen de conversion du courant continu (17) pour fournir un courant alternatif à un réseau d'utilisation (13) et qu'on régule les paramètres électriques du courant alternatif fourni au réseau d'utilisation (13), par commande du moyen (17) de conversion du courant continu en courant alternatif.

10. Procédé suivant la revendication 9, **caractérisé par le fait que** les paramètres électriques régulés du courant alternatif fourni au réseau (13) comportent le cosinus ϕ et la puissance réactive du courant fourni au réseau.

11. Procédé suivant l'une quelconque des revendications 9 et 10,
**caractérisé par le fait qu'**on régule la puissance électrique transmise du moyen de conversion du courant alternatif de l'alternateur (7) en courant continu au moyen de conversion (17) du courant continu en courant alternatif, par un moyen de découpage (16) du courant continu transmis entre le moyen de conversion (15) du courant alternatif en courant continu et le moyen (17) de conversion du courant continu en courant alternatif et de dérivation d'une partie au moins du courant électrique sur un rhéostat (29).

12. Procédé suivant la revendication 11, **caractérisé par le fait que**, lors d'une micro coupure du réseau électrique (13), d'une durée inférieure à une limite fixée (typiquement une seconde), on réalise le découpage du courant électrique et la dérivation d'une partie au moins du courant pour évacuer la puissance électrique de l'alternateur pendant la micro coupure du réseau (13).

13. Procédé suivant la revendication 11, **caractérisé par le fait que**, dans le cas d'une coupure du réseau électrique (13) d'une durée supérieure à la limite fixée (typiquement une seconde) ou d'un dysfonctionnement du moyen de production de courant alternatif (17), on provoque un arrêt de l'installation de production d'énergie électrique, au moins partiellement par freinage électrique, à partir du couple résistant de l'alternateur et on évacue une puissance électrique excédentaire produite par l'alternateur dans un rhéostat (29) du dispositif (16) de découpage du courant électrique continu produit par le moyen de conversion (15) du courant alternatif de l'alternateur (7) en courant continu.

14. Procédé suivant l'une quelconque des revendications 1 à 13, **caractérisé par le fait qu'**on réalise un arrêt de l'éolienne pour faire passer la vitesse de l'ensemble rotatif (5, 6, 8) d'une vitesse nominale à une vitesse faible pratiquement nulle, en réalisant un freinage électrique de l'ensemble rotatif (5, 6, 8) en augmentant le couple résistant de l'alternateur (7) par réglage des paramètres électriques du courant produit par l'alternateur (7), de manière progressive et qu'on évacue une puissance excédentaire sur l'un au moins du réseau (13) alimenté par l'installation de production de courant électrique et d'un rhéostat (29).

15. Procédé suivant l'une quelconque des revendications 1 à 14, **caractérisé par le fait qu'**on met en court-circuit l'alternateur (7) comportant un rotor (8) à aimants permanents, après arrêt de l'installation de production de courant électrique, de manière à créer un couple résistant s'opposant à une élévation de la vitesse de rotation de l'ensemble rotatif (5, 6, 8), pour obtenir une vitesse de rotation de l'ensemble rotatif (5, 6, 8) sensiblement inférieure à une vitesse de rotation lors d'un fonctionnement de l'installation pour la production d'énergie électrique.

16. Procédé suivant l'une quelconque des revendications 1 à 15, **caractérisé par le fait qu'**on effectue le démarrage de l'éolienne initialement à l'arrêt, en faisant fonctionner l'alternateur (7) en moteur synchrone alimenté par l'intermédiaire de l'électronique de puissance (12), de manière à entraîner la partie tournante (5, 6) de l'éolienne à une vitesse de démarrage de l'alternateur (7).

17. Dispositif de régulation d'une installation de production d'énergie électrique comportant un alternateur électrique (7) ayant un rotor (8) solidaire de la partie tournante (5, 6) d'une éolienne, pour constituer un ensemble rotatif (5, 6, 8), et une électronique de puissance (12) comportant un moyen (15) de conversion du courant alternatif produit par l'alternateur (7), en courant continu, **caractérisé par le fait que** le moyen de conversion du courant alternatif produit par l'alternateur (7) en courant continu est un redresseur à modulation de largeur d'impulsion (15) relié à une unité de régulation et de commande numérique (20) régulant le courant continu par impulsions produit par le redresseur à modulation de largeur d'impulsion (15), en fonction d'une mesure d'intensité et de tension du courant produit par l'alternateur et de la vitesse de rotation de l'ensemble rotatif (5, 6, 8), l'unité de régulation et de commande numérique (20) étant apte ce régler la vitesse de rotation de l'ensemble rotatif (5, 6, 8) par modulation du courant continu produit par etle redresseur à modulation de largeur d'impulsion (15).

18. Dispositif suivant la revendication 17, **caractérisé par le fait que** l'électronique de puissance (12) comporte de plus un onduleur à modulation de largeur d'impulsion (17) relié à une partie de sortie du redresseur à modulation de largeur d'impulsion (15) par au moins un bus à courant continu (18), ayant une partie de sortie reliée à un réseau (13) d'utilisation d'un courant alternatif produit par l'onduleur à modulation d'impulsion (17) à partir du courant continu, l'onduleur à modulation de largeur d'impulsion (17) étant relié à l'unité de régulation et de commande numérique (20) recevant une mesure de la tension du courant alternatif fourni au réseau d'utilisation (13), pour réguler le courant électrique fourni par l'onduleur à modulation d'impulsion( 17) au réseau (13).

19. Dispositif suivant l'une quelconque des revendications 17 et 18,
**caractérisé par le fait que** l'électronique de puissance (12) comporte de plus un hacheur rhéostatique (16) relié à la partie de sortie du redresseur à modulation d'impulsion (15) et à une partie d'entrée de l'onduleur à modulation d'impulsion (17) à courant continu, le hacheur rhéostatique (16) étant relié à l'unité de régulation et de commande numérique (20) qui reçoit un signal représentatif de la tension dans le bus à courant continu (18) reliant la partie de sortie du redresseur à modulation d'impulsion (15) au hacheur rhéostatique (16), de manière à commander le découpage du courant électrique traversant le hacheur rhéostatique (16) et la dérivation d'une partie au moins du courant électrique vers un rhéostat (29), lors d'une augmentation de la tension dans le bus à courant continu (18).

20. Dispositif selon l'une quelconque des revendications 17 à 19,
**caractérisé par le fait que** le rotor (8) de l'alternateur électrique (7) est un rotor à aimants permanents et que l'alternateur électrique (7) comporte des moyens de couplage de phases de l'alternateur entre elles.

21. Dispositif selon l'une quelconque des revendications 17 à 19,
**caractérisé par le fait que** le rotor (8) de l'alternateur électrique (7) est un rotor bobiné et, notamment, un rotor bobiné synchrone.

## Claims

1. Process for regulating an electrical energy producing installation comprising an electric alternator (7) having a rotor (8) fixedly connected to the rotating part (5, 6) of a wind turbine, to form a rotary assembly, and an electronic power system (12) comprising means (15) for converting the alternating current produced by the alternator (7) into direct current, **characterised in that** the electrical characteristics of the electric current produced by the alternator (7) and the speed of rotation of the rotary assembly are regulated by modulating the direct current produced by the conversion means (15) of the electronic power system (12) from the electric current produced by the alternator (7).

2. Regulating process according to claim 1, **characterised in that** in a first operating phase of the electrical energy producing installation, for low wind speeds, the speed of rotation of the rotary assembly (5, 6, 8) of the wind turbine is increased, so that the speed of rotation changes progressively from a low start-up value to a maximum value, the torque on the rotor increasing in accordance with a predetermined law of speed variation/torque.

3. Process according to claim 2, **characterised in that** in a second operating phase, when the wind speed is above a first threshold value, the speed of rotation of the rotary assembly (5, 6, 8) of the wind turbine is regulated to a fixed maximum value, or rated value, making it possible to achieve optimum power recovery from the wind turbine.

4. Process according to claim 2, **characterised in that**, in a second operating phase of the wind turbine, when the wind speed is above a second threshold value, the maximum speed of rotation of the rotary assembly (5, 6, 8) of the wind turbine is regulated so as to keep the power of the wind turbine at a fixed value and preferably at the maximum power value that can be tolerated by the wind turbine.

5. Process according to any one of claims 1, 2, 3 and 4, **characterised in that** the electrical characteristics of the electric current produced by the alternator are regulated so that the internal open circuit voltage of the alternator is in phase with the strength of the current.

6. Process according to any one of claims 2 to 5, **characterised in that** the maximum speed of rotation of the rotary assembly (5, 6, 8) of the wind turbine is regulated to a value that allows uncoupling of the blades (6) of the rotating part (5, 6) of the wind turbine, for a specified wind speed.

7. Process according to claim 4, **characterised in that**, when the wind speed is below the second threshold value, the speed of rotation of the rotary assembly is increased progressively and in regulated manner and the variations in the value of the speed of rotation are recorded, so as to use the curve of variation in the speed of rotation subsequently to monitor the increase in speed of the rotary assembly.

8. Process according to claim 3, **characterised in that** the nominal value of the speed of rotation is fixed at a value taken from at least two values, as a function of climatic conditions on the site of the wind turbine, and in particular at a first value in the summer and at a second value in the winter.

9. Process according to any one of claims 1 to 8, **characterised in that** means for converting the direct current (17) are used to supply an alternating current to a user grid (13) and **in that** the electrical parameters of the alternating current supplied to the user grid (13) are regulated by controlling the means (17) for converting the direct current into alternating current.

10. Process according to claim 9, **characterised in that** the regulated electrical parameters of the alternating current supplied to the grid (13) comprise cosine ϕ and the reactive power of the current supplied to the grid.

11. Process according to any one of claims 9 and 10, **characterised in that** the electric power transmitted from the means for converting the alternating current from the alternator (7) into direct current to the means for converting (17) the direct current into alternating current are regulated by means (16) for cutting off the direct current transmitted between the means (15) for converting the alternating current into direct current and the means (17) for converting the direct current into alternating current and diverting at least some of the electric current to a rheostat (29).

12. Process according to claim 11, **characterised in that** during a micro-cut in the electric grid (13) lasting for a period below a fixed limit (typically one second), the electric current is cut off and at least some of the current is diverted in order to evacuate the electric power from the alternator during the micro-cut in the grid (13).

13. Process according to claim 11, **characterised in that** in the event of a cut in the electric grid (13) lasting longer than the fixed limit (typically one second) or malfunction of the means for producing alternating current (17), the electrical energy producing installation is shut down, at least partly by electric braking, starting from the resisting torque of the alternator, and excess electric power produced by the alternator is evacuated into a rheostat (29) of the device (16) for cutting off the direct electric current produced by the means (15) for converting the alternating current from the alternator (7) into direct current.

14. Process according to any one of claims 1 to 13, **characterised in that** the wind turbine is stopped in order to change the speed of the rotary assembly (5, 6, 8) from a rated speed to a low speed of virtually zero, by carrying out electric braking of the rotary assembly (5, 6, 8) by increasing the resisting torque of the alternator (7) by regulating the electric parameters of the current produced by the alternator (7) progressively and excess power is evacuated to at least one of the grid (13) supplied by the electric current producing installation and a rheostat (29).

15. Process according to any one of claims 1 to 14, **characterised in that** the alternator (7) comprising a rotor (8) with permanent magnets is short-circuited, after the electric current producing installation has been shut down, so as to create a resisting torque that opposes any increase in the speed of rotation of the rotary assembly (5, 6, 8), in order to obtain a speed of rotation of the rotary assembly (5, 6, 8) which is substantially less than a speed of rotation during operation of the installation for the production of electrical energy.

16. Process according to any one of claims 1 to 15, **characterised in that** the wind turbine is initially started up in the stopped position by operating the alternator (7) as a synchronous motor supplied via the electronic power system (12), so as to drive the rotating part (5, 6) of the wind turbine at a start-up speed of the alternator (7).

17. Device for regulating an electrical energy producing installation comprising an electric alternator (7) having a rotor (8) fixedly connected to the rotating part (5, 6) of a wind turbine, to form a rotary assembly (5, 6, 8), and an electronic power system (12) comprising means (15) for converting the alternating current produced by the alternator (7) into direct current, **characterised in that** the means for converting the alternating current produced by the alternator (7) into direct current is a pulse width modulating rectifier (15) connected to a regulating and digital control unit (20) that regulates the direct current by pulses produced by the pulse width modulating rectifier (15), as a function of a measurement of the strength and voltage of the current produced by the alternator and the speed of rotation of the rotary assembly (5, 6, 8), the regulating and digital control unit (20) being adapted to regulate the speed of rotation of the rotary assembly (5, 6, 8) by modulating the direct current produced by the pulse width modulating rectifier (15).

18. Device according to claim 17, **characterised in that** the electronic power system (12) further comprises a pulse width modulating inverter (17) connected to an output part of the pulse width modulating rectifier (15) by at least one direct-current bus (18), having an output part connected to a user grid (13) for an alternating current produced by the pulse width modulating inverter (17) from the direct current, the pulse width modulating inverter (17) being connected to the regulating and digital control unit (20) receiving a measurement of the voltage of the alternating current supplied to the user grid (13), in order to regulate the electric current supplied by the pulse width modulating inverter (17) to the grid (13).

19. Device according to any one of claims 17 and 18, **characterised in that** the electronic power system (12) further comprises a rheostatic chopper (16) connected to the output part of the pulse width modulating rectifier (15) and an input part of the direct-current pulse width modulating inverter (17), the rheostatic chopper (16) being connected to the regulating and digital control unit (20) which receives a signal representing the voltage in the direct-current bus (18) connecting the output part of the pulse width modulating rectifier (15) to the rheostatic chopper (16), so as to control the cutting off of the electric current passing through the rheostatic chopper (16) and the diverting of at least some of the electric current to a rheostat (29), when there is an increase in the voltage in the direct-current bus (18).

20. Device according to one of claims 17 to 19, **characterised in that** the rotor (8) of the electric alternator (7) is a permanent magnet rotor and **in that** the electric alternator (7) comprises means for coupling the phases of the alternator to one another.

21. Device according to any one of claims 17 to 19, **characterised in that** the rotor (8) of the electric alternator (7) is a coiled rotor and, in particular, a synchronous coiled rotor.

## Patentansprüche

1. Verfahren zur Regelung einer Vorrichtung zur Erzeugung elektrischer Energie, mit einem Wechselstromgenerator (7) mit einem Rotor (8), der mit einem rotierenden Teil (5,6) einer Windkraftanlage verbunden ist, zur Bildung einer rotierenden Anordnung, und einer Leistungselektronik (12) mit einem Mittel (15) zur Umwandlung des Wechselstroms, der von dem Generator (7) erzeugt wird, in Gleichstrom, **dadurch gekennzeichnet, dass** elektrische Eigenschaften des durch den Generator (7) erzeugten elektrischen Stroms und die Rotationsgeschwindigkeit der rotierenden Anordnung durch Modulation des Gleichstroms geregelt werden, der durch das Umwandlungsmittel (15) der Leistungselektronik (12) aus demvom Generator (7) erzeugten Strom erzeugt wird.

2. Regelungsverfahren gemäß Anspruch 1, **dadurch gekennzeichnet, dass** in einer ersten Betriebsphase der Vorrichtung zur Erzeugung elektrischer Energie bei niedrigen Windgeschwindigkeiten die Rotationsgeschwindigkeit der rotierenden Anordnung (5,6,8) der Windkraftanlage derart erhöht wird, dass die Rotationsgeschwindigkeit sukzessive einen kleinen Anlaufwert bis zu einem Maximalwert durchläuft, bei wachsendem Drehmoment auf den Rotor, gemäß einem vorbestimmten Gesetz der Veränderung der Geschwindigkeit/des Drehmoments.

3. Verfahren gemäß Anspruch 2, **dadurch gekennzeichnet, dass** in einer zweiten Betriebsphase, wenn die Windgeschwindigkeit größer als ein erster Schwellwert, die Rotationsgeschwindigkeit der rotierenden Anordnung (5,6,8) der Windkraftanlage bis zu einem festen Maximalwert oder einem Nominalwert geregelt wird, zur optimalen Leistungsrückgewinnung der Windkraftanlage.

4. Verfahren gemäß Anspruch 2, **dadurch gekennzeichnet, dass** in einer zweiten Betriebsphase, wenn die Windgeschwindigkeit größer ist als ein zweiter Schwellwert, die maximale Rotationsgeschwindigkeit der rotierenden Anordnung (5,6,8) der Windkraftanlage derart geregelt wird, dass die Leistung der Windkraftanlage einen festen Wert erreicht und vorzugsweise einen akzeptablen Leistungsmaximalwert der Windkraftanlage.

5. Verfahren gemäß einem der Ansprüche 1, 2, 3 und 4, **dadurch gekennzeichnet, dass** die elektrischen Eigenschaften des durch den Generator erzeugten elektrischen Stroms derart geregelt werden, dass eine interne Leerlaufspannung des Generators in Phase mit der Stärke des Stroms ist.

6. Verfahren gemäß einem der Ansprüche 2 bis 5, **dadurch gekennzeichnet, dass** die maximale Rotationsgeschwindigkeit der rotierenden Anordnung (5,6,8) der Windkraftanlage auf einen Wert geregelt wird, der ein Abheben der Rotorblätter (6) des rotierenden Teils (5,6) der Windkraftanlage ermöglicht, bei einer vorbestimmten Windgeschwindigkeit.

7. Verfahren gemäß Anspruch 4, **dadurch gekennzeichnet, dass** dann, wenn die Windgeschwindigkeit kleiner ist als der zweite Schwellwert, die Rotationsgeschwindigkeit der rotierenden Anordnung progressiv und geregelt erhöht wird und Variationen des Werts der Rotationsgeschwindigkeit derart gespeichert werden, dass später die Kurve der Veränderung der Rotationsgeschwindigkeit dazu verwendet werden kann, den Geschwindigkeitsanstieg der rotierenden Anordnung zu steuern.

8. Verfahren gemäß Anspruch 3, **dadurch gekennzeichnet, dass** man den Nominalwert der Rotationsgeschwindigkeit auf einen Wert von zumindest zwei Werten festlegt, die klimatischen Bedingungen am Ort der Windkraftanlage entsprechen, insbesondere aus einem Wert der Sommerperiode und einem Wert der Winterperiode.

9. Verfahren gemäß einem der Ansprüche 1 bis 8, **dadurch gekennzeichnet, dass** man ein Mittel zur Umwandlung des Gleichstroms (17) zur Einspeisung eines Wechselstroms in ein Verbrauchernetz (13) verwendet, und dass die elektrischen Parameter des Wechselstroms, der in das Verbrauchernetz eingespeist wird, durch Steuerung der Mittel (17) zur Umwandlung des Gleichstroms in Wechselstrom geregelt werden.

10. Verfahren gemäß Anspruch 9, **dadurch gekennzeichnet, dass** die elektrischen Regelparameter des Wechselstroms, der in das Netz (13) eingespeist wird, den Cosinus ϕ und die Blindleistung des in das Netz eingespeisten Stroms umfassen.

11. Verfahren gemäß einem der Ansprüche 9 oder 10, **dadurch gekennzeichnet, dass** die elektrische Leistung, die von dem Mittel zur Umwandlung des Wechselstroms des Generators (7) in Gleichstrom an Mittel (17) zur Umwandlung des Gleichstroms in Wechselstrom durch ein Mittel (16) zur Entkopplung des Gleichstroms, der zwischen den Mitteln zur Umwandlung (15) des Wechselstroms in Gleichstrom und den Mitteln (17) zur Umwandlung des Gleichstroms in Wechselstrom übertragen wird, und zur Ableitung zumindest eines Teils des elektrischen Gleichstroms über einen Regelwiderstand (29) geregelt wird.

12. Verfahren gemäß Anspruch 11, **dadurch gekennzeichnet, dass** während eines kurzfristigen Ausfalls des elektrischen Netzes mit einer Dauer kleiner als ein vorbestimmter Zeitraum (typischerweise einer Sekunde) eine Entkopplung des elektrischen Stroms und die Ableitung zumindest eines Teils des Stroms zur Entleerung der elektrischen Leistung des Generators während des kurzfristigen Ausfalls des Netzes (13) sichergestellt wird.

13. Verfahren gemäß Anspruch 11, **dadurch gekennzeichnet, dass** im Fall eines kurzfristigen Ausfalls des elektrischen Netzes mit einer Dauer größer als ein vorbestimmter Zeitraum (typischerweise eine Sekunde) oder einer Fehlfunktion der Mittel zur Erzeugung des Wechselstroms (17) ein Anhalten der Vorrichtung zur Erzeugung elektrischer Energie zumindest teilweise durch elektrisches Bremsen durch das Widerstandsmoment des Generators verursacht wird, und dass man in diesem Fall die überschüssige elektrische Leistung des Generators durch einen Regelwiderstand der Vorrichtung (16) zur Entkopplung des elektrischen Gleichstroms, der durch die Mittel (15) zur Umwandlung des Wechselstroms des Generators (7) in Gleichstrom erzeugt wird, entleert.

14. Verfahren gemäß einem der Ansprüche 1 bis 13, **dadurch gekennzeichnet, dass** man ein Anhalten der Windkraftanlage durch Durchlaufen der Geschwindigkeit der rotierenden Anordnung (5,6,8) durch eine Nominalgeschwindigkeit bis zu einer Geschwindigkeit von praktisch gleich Null realisiert, indem ein elektrisches Bremsen der rotierenden Anordnung (5,6,8) durch Vergrößerung des Widerstandsmoments des Generators (7) durch Regelung der elektrischen Parameter des durch den Generator (7) erzeugten Stroms in fortschreitender Weise erreicht wird, und man die überschüssige Leistung in zumindest ein Netz (13) eingespeist wird, das durch Einrichtung zur Erzeugung des elektrischen Stroms und durch einen Wechselwiderstand (29) gespeist wird.

15. Verfahren gemäß einem der Ansprüche 1 bis 14, **dadurch gekennzeichnet, dass** man den Generator (7) mit einem Rotor (8) mit Dauermagneten nach dem Anhalten der Vorrichtung zur Erzeugung elektrischer Energie kurzschließt, derart, dass ein Widerstandsmoment geschaffen wird, das einer Erhöhung der Geschwindigkeit der rotierenden Anordnung (5,6,8) entgegen wirkt, zur Erzielung einer Rotationsgeschwindigkeit der rotierenden Anordnung (5,6,8), die deutlich kleiner ist als eine Rotationsgeschwindigkeit während eines Betriebs der Vorrichtung zur Erzeugung elektrischer Energie.

16. Verfahren gemäß einem der Ansprüche 1 bis 15, **dadurch gekennzeichnet, dass** ein anfängliches Anlaufen der Windkraftanlage vom angehaltenen Zustand bewirkt wird, indem der Generator (7) als Synchronmotor betrieben wird, der mittels der Leistungselektronik (12) gespeist wird, derart, dass der rotierenden Teil (5,6) der Windkraftanlage mit einer Anlaufgeschwindigkeit des Generators (7) angetrieben wird.

17. Vorrichtung zur Regelung einer Anlage zur Erzeugung elektrischer Energie, mit einem elektrischen Generator (7) mit einem Rotor (8), der mit dem drehbaren Teil (5,6) einer Windkraftanlage verbunden ist, zur Bildung einer rotierenden Anordnung (5,6,8), und mit einer Leistungselektronik (12) mit einem Mittel (15) zur Umwandlung des Wechselstroms, der durch den Generator (7) erzeugt wird, in Gleichstrom, **dadurch gekennzeichnet, dass** die Mittel zur Umwandlung des durch den Generator (7) erzeugten Wechselstroms in Gleichstrom einen Gleichrichter zur Modulation der Impulsgröße (15) umfassen, der mit einer Einheit zur Regelung und numerischen Steuerung (20) zur Regelung des Gleichstroms durch von dem Gleichrichter zur Modulation der Impulsgröße (15) erzeugte Impulse verbunden ist, zur Bemessung der Stärke und der Spannung des Stroms, der durch den Generator erzeugt wird, und der Rotationsgeschwindigkeit der rotierenden Anordnung (5,6,8), wobei die Einheit zur Regelung und numerischen Steuerung (20) dazu vorgesehen ist, die Rotationsgeschwindigkeit der rotierenden Anordnung (5,6,8) durch Modulation des Gleichstroms zu regeln, der durch den Gleichrichter zur Modulation der Impulsgröße (15) erzeugt wird.

18. Vorrichtung gemäß Anspruch 17, **dadurch gekennzeichnet, dass** die Leistungselektronik (12) ferner einen Wechselrichter zur Modulation der Impulsgröße (17) umfasst, der einerseits mit dem Ausgang des Gleichrichters zur Modulation der Impulsgröße (15) durch zumindest einen Gleichstrombus (18) verbunden ist, und andererseits mit einem Teil des Ausgangs mit einem Verbrauchsnetz (13) für Wechselstrom, der von dem Wechselrichter zur Impulsmodulation (17) des Gleichstroms erzeugt wird, welcher Wechselrichter zur Modulation der Impulsgröße (17) mit einer Einheit zur Regelung und numerischen Steuerung (20) verbunden ist, die eine Spannungsgröße des Wechselstroms des Verbrauchsnetz (13) aufnimmt, zur Regelung des elektrischen Stroms, der von dem Wechselrichter zur Modulation der Impulse (17) an das Netz ausgegeben wird.

19. Vorrichtung gemäß einem der Ansprüche 17 und 18, **dadurch gekennzeichnet, dass** die Leistungselektronik (12) ferner einen Zerhacker-Regelwiderstand (16) umfasst, der einerseits mit dem Ausgang des Gleichrichters zur Impulsmodulation (15) verbunden ist und andererseits mit dem Eingang des Wechselrichters zur Impulsmodulation (17) des Gleichstroms, welcher Zerhacker-Regelwiderstand (16) mit einer Einheit zur Regelung und numerischen Steuerung (20) verbunden ist, die ein Signal empfängt, das die Spannung auf dem Bus des Gleichstroms (18) repräsentiert, der den Teil des Ausgangs des Gleichrichters zur Impulsmodulation (15) mit dem Zerhacker-Regelwiderstand (16) verbindet, derart, dass die Entkopplung des elektrischen Stroms durch den Zerhacker-Regelwiderstand (16) und die Ableitung zumindest eines Teils des elektrischen Stroms über einen Regelwiderstand (29) gesteuert werden, während einer Vergrößerung der Spannung auf dem Bus des Gleichstroms (18).

20. Vorrichtung gemäß einem der Ansprüche 17 bis 19, **dadurch gekennzeichnet, dass** der Rotor (8) des elektrischen Generators (7) ein Rotor mit Dauermagneten ist, und dass der elektrische Generator (7) Mittel zur Kopplung der Phasen des Generators miteinander umfasst.

21. Vorrichtung gemäß einem der Ansprüche 17 bis 19, **dadurch gekennzeichnet, dass** der Rotor (8) des elektrischen Generators (7) ein Spulenrotor ist, und insbesondere ein Synchronspulenrotor.
